(19) **Europäisches Patentamt**
European Patent Office
Office européen des brevets

(11) **EP 2 720 776 B1**

(12) **EUROPÄISCHE PATENTSCHRIFT**

(45) Veröffentlichungstag und Bekanntmachung des Hinweises auf die Patenterteilung:
**25.03.2020  Patentblatt 2020/13**

(21) Anmeldenummer: **12735800.0**

(22) Anmeldetag: **20.06.2012**

(51) Int Cl.:
**B01D 47/10** *(2006.01)*    **B01F 3/04** *(2006.01)*

(86) Internationale Anmeldenummer:
**PCT/EP2012/061859**

(87) Internationale Veröffentlichungsnummer:
**WO 2012/175566 (27.12.2012 Gazette 2012/52)**

(54) **RINGSPALTWÄSCHER MIT RINGSPALTEINDÜSUNG**

ANNULAR GAP SCRUBBER HAVING ANNULAR GAP INJECTION

LAVEUR À FENTE ANNULAIRE À INJECTION PAR BUSES DANS UNE FENTE ANNULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2011   DE 102011105409**

(43) Veröffentlichungstag der Anmeldung:
**23.04.2014   Patentblatt 2014/17**

(73) Patentinhaber: **Primetals Technologies Austria GmbH**
**4031 Linz (AT)**

(72) Erfinder: **HEGEMANN, Karl-Rudolf**
**45289 Essen (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
| | |
|---|---|
| **GB-A- 809 378** | **GB-A- 1 227 499** |
| **LU-A1- 90 847** | **LU-A1- 90 847** |
| **US-A- 2 913 232** | **US-A- 3 284 064** |
| **US-A- 3 517 485** | **US-A- 3 556 489** |

Printed by Jouve, 75001 PARIS (FR)

**Beschreibung**

**Gebiet der Technik**

Die Erfindung betrifft einen Ringspaltwäscher nach Anspruch 1 und dessen Verwendung nach Anspruch 5.

Stand der Technik

Nassabscheider für Feinstäube und Aerosole industrieller Emissionen sind in der Technik der Abgasreinigung häufig eingesetzte Apparate. Entsprechend der VDI-Richtlinie 3679 unterscheidet man vier Hauptbauarten von Nassabscheidern, nämlich Kolonnenwäscher, Wirbelwäscher, Rotationswäscher und Venturiwäscher. Die Abscheidegrade von Venturiwäschern auch für Partikel mit sehr geringem Durchmesser sind im Vergleich zu den anderen Bauarten sehr hoch.

Ein klassischer Venturiwäscher nach dem Stand der Technik wie sie beispielsweise in GB1227499, US3556489, GB809378, US3284064, LU90847, US2913232 oder US3517485 beschrieben sind, umfasst in Strömungsrichtung eines zu reinigenden Gasstromes gesehen - und damit in Richtung seiner Längsachse gesehen, da ein Gasstrom in der Regel in Richtung der Längsachse des Venturiwäschers strömt, weil der Strömungskanal des Venturiwäschers entlang der Längsachse verläuft - hintereinander einen Konfusor, eine als Kehle ausgeführte Einschnürung des Strömungskanals, und einen Diffusor. Ein eintretender, staubbeladener Gasstrom wird im Konfusor des Strömungskanals beschleunigt und erreicht im engsten Querschnitt des Strömungskanals, seine höchste Geschwindigkeit.

Bei einem klassischen Ventruiwäscher wird in der Kehle die Waschflüssigkeit senkrecht zur Strömungsrichtung des zu reinigenden Gasstromes - auch Quereindüsung genannt - über eine Vielzahl nebeneinander in einer Ebene senkrecht zur Längsachse des Strömungskanals - auch Einspritzebene genannt - angeordneter Düsen - beispielsweise als kleine Düsenbohrungen ausgeführt - als Strahl eingedüst.

Im anschließenden Diffusor wird kinetische Energie des Gasstromes wieder in Druckenergie zurückverwandelt, die aber gegenüber dem theoretischen Druckrückgewinn aufgrund von Reibungsverlusten in der Zweiphasenströmung geringer ist.

Durch die Stoßkraft des Gases wird die Waschflüssigkeit in der Einschnürung in feinste Tröpfchen zerteilt. Der Abscheidegrad steigt mit zunehmender Geschwindigkeit des Gases in dem Bereich der Einschnürung an. Zurückzuführen ist dieser Anstieg auf die erhöhte Relativgeschwindigkeit zwischen Gas - beziehungsweise abzuscheidenden Partikeln - und Waschflüssigkeit und auf die Bildung größerer Grenzflächen zwischen der gasförmigen und flüssigen Phase.

Ein Anstieg des Abscheidegrades bei zunehmendem Waschflüssigkeits-Gas-Verhältnis ist ebenfalls eine Folge der vergrößerten Grenzfläche zwischen gasförmiger und flüssiger Phase; der Einsatz von mehr Waschflüssigkeit erhöht in der Regel den Abscheidegrad.

Der Abscheidegrad ist definiert als Verhältnis des nach Durchlaufen einer Entstaubungsvorrichtung im Gasstrom verbleibenden Staubgehaltes - Austrittsstaubgehalt - zu dem vor dem Durchlaufen der Entstaubungsvorrichtung im Gasstrom vorhandenen Staubgehalt -Eintrittsstaubgehalt:
Abscheidegrad $\eta$ (in %)

$$\eta = ((\text{Eintrittsstaubgehalt} - \text{Austrittsstaubgehalt})/\text{Eintrittsstaubgehalt}) * 100\ \%$$

Beim klassischen Venturiwäscher mit Quereindüsung spielt die Eindringtiefe der Waschflüssigkeit in den Strömungskanal der Kehle eine entscheidende Rolle für den Abscheidegrad, da sich der Abscheidegrad des Venturiwäschers sowohl bei zu weiter als auch bei zu geringer Eindringtiefe des Strahls der Waschflüssigkeit vermindert. Während im erstgenannten Fall die Waschflüssigkeit auf die der entsprechenden Düse gegenüberliegenden Wandbereiche der Kehle trifft und dort als Film abläuft, bildet sich bei zu geringer Eindringtiefe in der Mitte der Kehle eine Zone aus, in die keine Waschflüssigkeit eindringt, und in der der Gasstrom mit abzuscheidenden Partikeln ohne Berührung mit der Waschflüssigkeit den Wäscher passieren können.

Außerdem führen auch die aus konstruktiven und funktionellen Gründen unvermeidbaren Abstände der Düsen in der Einspritzebene der Kehle zu Zonen, in die aus Gründen der Geometrie der Anordnung der Düsen und des Spritzbildes der Düsen - ein Strahl der Waschflüssigkeit Austritt Düsenbohrung der Düse breitet sich als Vollkegelstrahl aus - keine aus den Düsen austretende Waschflüssigkeit eintreten kann, und in der der Gasstrom mit abzuscheidenden Partikeln ohne Berührung mit der Waschflüssigkeit den Wäscher passieren kann.

Zu beachten ist auch, dass eine starke Beschleunigung der Waschflüssigkeit und damit ein rasches Absinken der Relativgeschwindigkeit zwischen Waschflüssigkeit und Gasstrom - beziehungsweise abzuscheidenden Partikeln im Gasstrom - bewirkt wird, wenn die Waschflüssigkeit eine große Oberfläche zur Wechselwirkung mit dem Gasstrom darbietet. Nach einer nur kurzen Wegstrecke nach Austritt der Waschflüssigkeit aus den Düsen bis Austritt des Gasstromes samt mitgerissener Waschflüssigkeit aus der Kehle ist die Waschflüssigkeit so stark in Richtung des Betrages der Geschwindigkeit des Gasstromes beschleunigt - und damit die Relativgeschwindigkeit zwischen den Phasen derart abgesunken - , dass die Waschflüssigkeit im anschließenden Strömungsbereich nur noch einen geringen Geschwindigkeitszuwachs erfährt. Bei gegebener Geometrie des Venturiwäschers existieren durch Lastschwankungen Betriebspunkte, die von dem optimalen Betriebspunkt deutlich abweichen und bei denen ein entsprechend geringerer Abscheidegrad erzielt wird.

Zur Gruppe der Venturiwäscher, bei denen der zu reinigende Gasstrom eine Einschnürung des freien Strömungsquerschnitts im Strömungskanal erfährt, gehört auch der Ringspaltwäscher. Das wesentliche Merkmal des klassischen Ringspaltwäschers ist ein axial verstellbarer kegelförmiger Ringspaltkörper, der mit einem ebenfalls kegeligen Gehäuse des Ringspaltwäschers einen Ringspalt bildet. Der Ringspalt entspricht der Kehle des oben beschriebenen klassischen Venturiwäschers. Eine Veränderung des Ringspaltes durch axiales Verstellen des kegelförmigen Körpers im kegeligen Gehäuse führt zu einer Anpassung an veränderliche Mengenströme von Gasströmen.

Aufgrund des im Verhältnis zur Fläche des Strömungskanals relativ kleinen, einstellbaren Ringspaltes wird eine große Berieselungsdichte erreicht, was für die Auswaschung von wesentlicher Bedeutung ist. Die größte Stoßkraft in der Zweiphasenströmung von Gasstrom und Waschflüssigkeit wird am Eintritt in den Ringspalt erreicht. Die daran anschließende Ringspaltstrecke des Strömungskanals dient auch als Mischstrecke zur Abscheidung submikroner Staubteilchen durch eine überlagerte Querbewegung der dort turbulenten Gasströmung.

Der rotationssymmetrische Kreisquerschnitt des Ringspaltwäschers ermöglicht das Einbringen der Waschflüssigkeit in den Ringspalt entweder mithilfe einer zentral angeordneten großen, verstopfungsfrei arbeitenden Düse und/oder über einen schubspannungsgetriebenen Wandfilm, aus dem die Tröpfchen durch die Scherwirkung der Gasströmung in Richtung Ringspalt herausgelöst werden.

Im klassischen Ringspaltwäscher beispielsweise wird die Waschflüssigkeit über eine zentral angeordnete Hohlkegeldüse vor der Gasbeschleunigung des Konfusors eingedüst, weil derartige Düsentypen wegen ihrer einfachen und robusten Bauweise nicht zu Verstopfungen neigen. Die Flüssigkeit tritt bei Hohlkegeldüsen in Form eines dünnen, kegelförmigen Flüssigkeitsfilms - auch Lamelle genannt - aus, die ab einem bestimmten Abstand von der Hohlkegeldüse in ein Kollektiv von Tropfen zerfällt. Eine große Anzahl der feinen Tropfen wird vom Gasstrom direkt in den Ringspalt mitgerissen. Die größeren Tropfen treffen die Wand des Ringspaltwäschers im Bereich der Hohlkegeldüse oder im Bereich des Konfusors. Von dort läuft die Waschflüssigkeit als Filmströmung in den Konfusor beziehungsweise im Konfusor in Richtung Ringspalt. Aus dem anwachsenden Film an der kleiner werdenden Wandfläche des sich verjüngenden Konfusors werden durch Schubspannungskräfte der beschleunigten Gasströmung immer mehr Flüssigkeitsstrukturen herausgelöst, die zu sehr feinen Tropfen dispergieren und in den Ringspalt gelangen. Die erzeugten kleinen Tropfen verschieben die Tropfengrößenverteilung zu einem kleineren mittleren Durchmesser, was zur Erhöhung der Tropfenoberfläche und damit zu einer Vergrößerung der Stoffaustauschfläche führt. Die Anfangsrelativgeschwindigkeit zwischen Gasstrom und Waschflüssigkeit verringert sich bei den feinen Tropfen sehr schnell. Das Heranführen submikroner Staubteilchen an die feinen Tropfen der Waschflüssigkeit erfolgt entlang der Ringspaltstrecke des Strömungskanals durch die Überlagerung einer Querbewegung der dort turbulenten Gasströmung.

Auch ist es möglich, die gesamte Waschflüssigkeit vor dem Konfusor über mehrere tangentiale Eintritte als Wandfilm aufzugeben. Auf eine Kegeldüse kann dabei verzichtet werden. Die Energie für die Verteilung der Waschflüssigkeit wird dann überwiegend durch turbulente Gasströmung bereitgestellt.

Der Bereich am Eintritt in den Ringspalt ist eine Zone hoher Relativgeschwindigkeiten und die Ringspaltstrecke des Strömungskanals als Zone turbulenter Diffusion.

Die eigentliche Abscheidung von Partikeln wie beispielsweise Staub aus dem Gasstrom - der Stoffübergang der Partikel vom Trägergas Gasstrom an die Waschflüssigkeit - erfolgt bei beiden beschriebenen Typen von Venturiwäschern erst über Waschflüssigkeits- bzw. Tropfenabscheidung - der Separation von gasförmiger und flüssiger Phase.

Mit bekannten Venturiwäschern werden beispielsweise bei der Konvertergasreinigung in Konverteranlagen von Stahlwerken in der Chargierperiode und der nachfolgenden Blasperiode Abscheidungsgrade erzielt, bei denen das gewaschene Konvertergas über die gesamte Periode im Mittel typischerweise einen Reingasstaubgehalt von etwa 140 oder 150 mg/$m^3_n$ hat. Um den umweltrechtlichen Auflagen zu entsprechen, werden herkömmlichen Wäschern typischerweise Filter nachgeschaltet, um den Reingasstaubgehalt weiter zu reduzieren.

Technische Aufgabe

Der vorliegenden Erfindung liegt die Aufgabe zugrunde, eine Verbesserung des Abscheidegrades von Ringspaltwäschern zu erreichen durch Verfahrensmassnahmen beziehungsweise durch Bereitstellung von Vorrichtungen zur Durchführung der Verfahrensmassnahmen.

Technische Lösung

Diese Aufgabe wird gelöst durch ein

Verfahren zur Reinigung eines staubbeladenen Gasstromes durch Nassentstaubung in einem Ringspaltwäscher mittels einer eingedüsten Waschflüssigkeit, dadurch gekennzeichnet, dass zumindest eine Teilmenge der Waschflüssigkeit, bevorzugt die gesamte Waschflüssigkeit, gegen die Strömungsrichtung des Gasstromes in den Gasstrom eingedüst wird.

Vorteilhafte Wirkungen der Erfindung

Wenn zumindest eine Teilmenge der Waschflüssigkeit, bevorzugt die gesamte Waschflüssigkeit gegen die Strömungsrichtung des Gasstromes in den Gasstrom eingedüst wird, wird der Abscheidegrad bei gleicher Menge eingedüster Waschflüssigkeit ganz erheblich erhöht. Dies wird darauf zurückgeführt, dass durch das Eindüsen der Waschflüssigkeit entgegen der Strömungsrichtung des Gasstroms zum einen eine höhere Relativgeschwindigkeit zwischen den Tröpfchen der Waschflüssigkeit und dem Gasstrom erzielt und zum anderen die Eindringtiefe der Waschflüssigkeit in den Gasstrom deutlich erhöht wird, so dass mit der Waschflüssigkeit eine größere Fläche des Gasstromquerschnitts abgedeckt wird.

Ein weiterer Gegenstand der vorliegenden Erfindung ist eine Vorrichtung zur Durchführung des erfindungsgemäßen Verfahrens.

Eine solche Vorrichtung ist ein
Ringspaltwäscher mit einer Längsachse,

- mit einem zumindest durch einen Konfusor, einen Diffusor und einen Ringspaltkörper definierten Strömungskanal ,wobei der Ringspaltkörper mit zumindest dem Diffusor, und gegebenenfalls auch mit dem Konfusor, einen Ringspalt des Strömungskanals ausbildet,
und

- mit Düsen zum Eindüsen von Waschflüssigkeit in den Strömungskanal,

dadurch gekennzeichnet,
dass zumindest eine, bevorzugt mehrere, besonders bevorzugt alle diese Düsen in den Ringspalt münden.

Unter der Formulierung in den Ringspalt münden ist zu verstehen, dass sich die Öffnungen, durch die die Waschflüssigkeit austritt, in den Ringspalt öffnen.

Der Ringspaltkörper ist bevorzugt axial entlang der Längsachse des Strömungskanals verschiebbar. Bevorzugt fällt die Längsachse des Ringspaltkörpers mit der Längsachse des Strömungskanals zusammen. Bevorzugt ist der Ringspaltkörper ein Kegelstumpf. Der Ringspalt wird zwischen der Wand des Diffusors und gegebenenfalls des Konfusors und dem Ringspaltkörper gebildet.

Die Düsen können in den Bereich des Ringspaltes münden, der vom Konfusor begrenzt wird, oder in den Bereich des Ringspaltes, der vom Diffusor begrenzt wird. Oder es können Düsen vorhanden sein, die in den Bereich des Ringspaltes münden, der vom Konfusor begrenzt wird, und Düsen vorhanden sein, die in den Bereich des Ringspaltes münden, der vom Diffusor begrenzt wird.

Der Ringspaltkörper führt im Betrieb entlang des Diffusors zu einer Ringspaltstrecke des Strömungskanals mit nahezu gleichbleibender Geschwindigkeit des Gasstromes. In Richtung des Strömungskanals vom Konfusor in Richtung Diffusor gesehen hinter den Düsen zerfällt im Betrieb der eingedüste Wasserstrahl in einen dispers im Gasstrom verteilten Tropfenschwarm. Die erfindungsgemäße Anordnung von Düsen mit Mündung in den Ringspalt hat zur Folge, dass beim Betrieb des Ringspaltwäschers direkt anschließend an die Stellen, an denen eingedüst wird, eine Ringspaltstrecke mit turbulenter Gasströmung besteht. In turbulenter Gasströmung können feinste, nahezu trägheitslose Partikel ohne großen Energieaufwand durch Querbewegungen der turbulenten Gasströmung am Tropfenschwarm abgeschieden werden.

Mit der erfindungsgemäßen Bauweise, speziell wenn die Düsen in einem vom Diffusor begrenzten Bereich des Ringspaltes münden, eine höhere Relativgeschwindigkeit zwischen Waschflüssigkeit und Partikeln im Gasstrom sowie eine umfangreichere, bis zu vollständige, Benetzung des Gasstromes erreicht werden. Die Staubabscheidung submikroner Partikel wird dadurch erhöht.

Die Düsen können senkrecht zur Längsachse des Ringspaltwäschers positioniert sein oder gegen die Längsachse des Ringspaltwäschers in Richtung Konfusor angestellt sein. Bevorzugt ist zumindest eine der Düsen, bevorzugt mehrere der Düsen, besonders bevorzugt alle Düsen in Richtung zum Diffusor hin in einem spitzen Winkel gegen die Längsachse des Ringspaltwäschers im Ringspalt angestellt sind.

Die Waschflüssigkeit kann also quer zur Längsachse des Ringspaltwäschers oder in Richtung Konfusor eingedüst werden.

Wenn die Düsen so positioniert sind, wird die Waschflüssigkeit immer in einem spitzen Winkel gegen die Strömungsrichtung des zu reinigenden Gasstromes eingedüst, da der Strömungskanal im Ringspalt schräg zur Längsachse des Ringspaltwäschers strömt. Es wurde überraschend festgestellt, dass durch das Eindüsen der Waschflüssigkeit in einem spitzen Winkel zur Strömungsrichtung des zu reinigenden Gasstromes der Abscheidegrad bei gleicher Menge eingespritzter Waschflüssigkeit ganz erheblich erhöht werden konnte. Dies wird darauf zurückgeführt, dass durch das Eindüsen entgegen der Strömungsrichtung zum einen eine höhere Relativgeschwindigkeit zwischen den Tröpfchen der Waschflüssigkeit erzielt, und zum anderen die Eindringtiefe der Waschflüssigkeit in den Strömungskanal deutlich erhöht wird, so dass mit der Waschflüssigkeit eine größere Fläche des Strömungskanalquerschnitts abgedeckt wird. Bevorzugt münden die Düsen, die in den Ringspalt münden, in einen Bereich des Ringspaltes, der vom Ringspaltkörper und dem Diffusor ausgebildet wird.

Dort ist die Strömungsgeschwindigkeit des Gasstromes höher als im Bereich des Ringspaltes, der vom Ringspaltkörper und dem Konfusor ausgebildet wird, weshalb die positiven Effekte der erfindungsgemäßen Eindüsung verstärkt auftreten.

Besonders bevorzugt münden die Düsen, die in den Ringspalt münden, in den Eintrittsbereich des Bereichs des Ringspaltes, der vom Ringspaltkörper und dem Diffusor ausgebildet wird.

Dann steht dem Gasstrom noch eine lange Strömungsstrecke im Ringspalt zur Verfügung, wo Abscheidung der Partikel auf der Waschflüssigkeit stattfinden kann.

Unter dem Eintrittsbereich ist dabei der Bereich zu verstehen, der vom Konfusor aus gesehen entlang der Längsachse des Ringspaltwäschers gemessen von den ersten 50% der ebenso gemessenen Länge des Diffusors ausgemacht wird, bevorzugt den ersten 40%, besonders bevorzugt den ersten 30%, ganz besonders bevorzugt den ersten 20%.

Vorzugsweise ist zumindest eine der Düsen, bevorzugt mehrere der Düsen, besonders bevorzugt alle Düsen in Richtung zum Diffusor hin in einem spitzen Winkel gegen die Längsachse des Ringspaltwäschers im Ringspalt angestellt. Dabei schließen die die Düsen mit der Längsachse des Ringspaltwäschers vorzugsweise einen Winkel von in einem Bereich mit einer Untergrenze von zumindest 20°, bevorzugt zumindest 30°, und einer Obergrenze von maximal 70°, bevorzugt maximal 60°, ein, vorzugsweise 20°-70° oder 30°-60°, ganz besonders bevorzugt 45°, ein.

In einer weiteren bevorzugten Ausgestaltung eines erfindungsgemäßen Ringspaltwäschers sind die in den Ringspalt mündenden Düsen zur Eindüsung von Waschflüssigkeit in mindestens zwei, vorzugsweise in vier, Ebenen vom Konfusor in Richtung Diffusor entlang der Längsachse des Ringspaltwäschers gesehen hintereinander angeordnet.

Mehrstufige - also in verschiedenen Ebenen erfolgende - Eindüsung von Waschflüssigkeit führt im Vergleich zu einer Eindüsung der gleichen Menge Waschflüssigkeit in nur einer Ebene zu einer Zunahme von Oberfläche zur Abscheidung von Partikeln auf der Waschflüssigkeit. Das steigert den mit einer bestimmten Menge Waschflüssigkeit erzielbaren Abscheidegrad beziehungsweise senkt bei einem gegebenen Abscheidegrad den auf der Eintrittseite des Gasstromes in den Ringspaltwäscher zu treibenden Energieaufwand.

Dabei liegen einige oder alle dieser Ebenen vorzugsweise senkrecht zur Längsachse des Strömungskanals, sind also Querschnittebenen des Strömungskanals. Dabei ist ein Abstand benachbarter Düsenebenen voneinander in Richtung Längsachse des Strömungskanals in der Größe von 200 mm bis 300 mm bevorzugt, besonders bevorzugt 200 mm, ganz besonders bevorzugt 220 mm. Dadurch wird erreicht, dass in dem Volumabschnitt des Ringspaltes, in dem unter Wirkung der Oberflächenspannung nach Abklingen der Relativgeschwindigkeit zwischen den Phasen die Lamellen und Membranen der Waschflüssigkeit zu Tropfenketten zerfallen, eine ausreichend lange Strömungsstrecke im Ringspalt vorliegt, um submikrone Teilchen durch turbulente Diffusion zu erfassen. Der eingedüste Strahl Waschflüssigkeit zerfällt zunächst durch Impuls- und Scherkräfte des in dem Bereich des Ringspaltes, in dem die Düsen positioniert sind, turbulent strömenden Gasstromes in Lamellen und Membranen. Diese ziehen sich nach Abklingen der Beschleunigung durch den Gasstrom zu Tropfenketten von nahezu einheitlichem Durchmesser von 40 mikrometern zusammen. In den Volumabschnitten des Ringspaltes, in denen die Waschflüssigkeit nur noch in Tropfenform vorliegt, ist die Oberfläche zur Abscheidung von Partikeln auf der Waschflüssigkeit im Vergleich zu den Volumsabschnitten, in denen Lamellen und Membranen vorliegen, geringer. In der Ringspaltstrecke, die von diesen Tropfenketten durchlaufen wird, erfolgt die Anlagerung submikroner Partikel an die Tropfen durch turbulente Diffusion, weil die Geschwindigkeit des Gasstromes durch den auf dieser Strecke stattfindenden Druckverlust annähernd konstant bleibt.

Vorzugsweise sind die Düsen von in Richtung der Längsachse des Strömungskanals hintereinander liegenden Ebenen zueinander versetzt am Umfang des Ringspaltes angeordnet - in Richtung der Längsachse des Strömungskanals betrachtet liegen also zumindest die Düsen zweier direkt benachbarter Ebenen nicht direkt hintereinander, sondern die Düsen einer zweiten Ebene befinden sich in Bereichen des Umfangs, die einen Zwischenraum benachbarter Düsen der ersten Ebene darstellen. Damit wird erreicht, dass die zwischen den Düsen einer Querschnittsebene des Strömungskanals liegenden Totbereiche, die von der aus diesen Düsen eingedüsen Waschflüssigkeit nicht erreicht werden, durch die aus Düsen einer nachfolgenden Querschnittsebene eingedüste Waschflüssigkeit erreicht werden.

Vorzugsweise sind die Düsen einer Ebene unabhängig von den Düsen anderer Ebenen einschaltbar und/oder abschaltbar. Die verschiedenen Reihen von Düsen können dann einzeln zu- oder abgeschaltet werden.

Vorzugsweise wird beim Betrieb eines erfindungsgemäßen Ringspaltwäschers der auf der Eintrittsseite des Gasstromes in den Ringspaltwäscher betriebene Energieaufwand auf die durch in Abhängigkeit der Anzahl benutzter Ebenen von Düsen gewählt.

Vorzugsweise wird die Anzahl der Düsen in einer Ebene so gewählt, dass eine gleichmäßige Benetzung des Ringspaltes mit Waschflüssigkeit erfolgt.

Die Düsen sind beispielsweise als Düsenbohrungen ausgeführt. Vorzugsweise sind die Düsenbohrungen am Austritt mit Abrundungen oder Anphasungen versehen. Das ermöglicht es, bei der Eindüsung große Spritzwinkel zu erreichen.

Vorzugsweise sind Stößeleinrichtungen mit Antrieb vorhanden, vorzugsweise Hydraulikzylinder-Antrieb, mit denen die Düsen beziehungsweise Düsenbohrungen von Verstopfungen freigehalten werden können. Bevorzugt wird dazu ein Schaltprogramm genutzt.

Mit den erfindungsgemäßen Maßnahmen können Abscheidegrade erzielt werden, die ganz erheblich über denen vorbekannter Venturiwäscher und Ringspaltwäscher liegen; das heißt, im gereinigten Gas ist weniger Staubbelastung gegeben als bei vorbekannten Venturiwäschern und Ringspaltwäschern. So kann der Mittelwert der Staubbelastung des Reingases bei Konverteranlagen auf etwa 50 mg/m$^3_n$, oder weniger - bis zu kleiner 20 mg/m$^3_n$ - reduziert werden. Damit kann auf aufwändige, nachgeschaltete Filteranlagen verzichtet werden.

Ein weiterer Gegenstand der Erfindung ist die Verwendung eines erfindungsgemäßen Ringspaltwäschers zur Reinigung von Konvertergas, also bei der Stahlherstellung anfallendem Abgas.

Kurze Beschreibung der Zeichnungen

Im Folgenden wird die Erfindung an schematischen Figuren zum Stand der Technik und zu beispielhaften Ausführungsformen der Erfindung näher erläutert.

Es zeigen:

Figur 1 einen klassischen Venturiwäscher;
Figur 2 einen klassischen Ringspaltwäscher;
Figur 3 zwei kombinierte Längsschnitte zweier erfindungsgemäßer Ausführungsformen von erfindungsgemäßen Ringspaltwäschern
Figur 4 einen Querschnitt durch die in Figur 3 dargestellten erfindungsgemäßen Ausführungsformen entlang der Schnittlinie A-A.
Figur 5 einen erfindungsgemäßen Ringspaltwäscher mit Düsen in verschiedenen Ebenen
Figur 6 eine Schrägansicht auf verschiedene Düsenebenen mit zueinander versetzten Düsen.

Beschreibung der Ausführungsformen

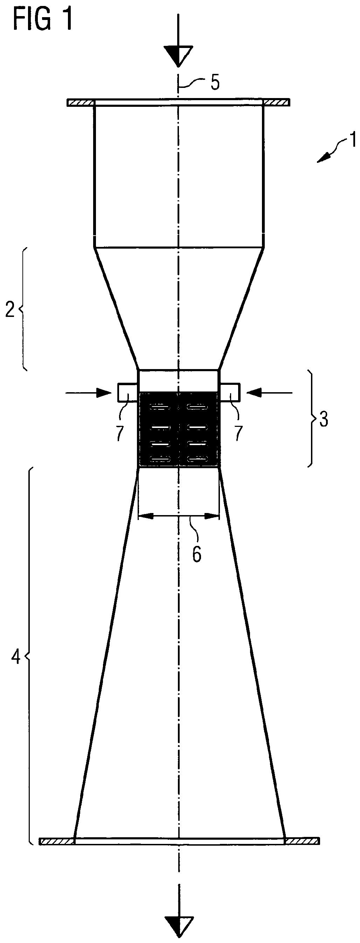

In Figur 1 ist der typische Aufbau eines klassischen Venturiwäschers 1 mit Quereindüsung gezeigt. Der zu reinigende Gasstrom - mit den Pfeilen mit halb gefüllter Spitze angedeut - strömt in der Strömungsrichtung von oben nach unten durch den Venturiwäscher 1. Dabei durchströmt er nacheinander den Bereich des Konfusors 2, den Bereich der Kehle 3 und den Bereich des Diffusors 4 des Venturiwäschers, welche den Strömungskanal definieren. Die Längsachse des Strömungskanals, welche mit der Längsachse des Venturiwäschers zusammenfällt - und vom Konfusor 2 in Richtung Diffusor 4 gesehen der Strömungsrichtung des Gasstromes entspricht, ist mit dem Bezugszeichen 5 versehen. Der Strömungsquerschnitt in den verschiedenen Bereichen ist im dargestellten Fall rechteckig, er könnte grundsätzlich auch anders sein. Die Breite 6 der Kehle 3 - und damit der für die Strömung verfügbare Strömungsquerschnitt - ist gegenüber der Breite und dem Strömungsquerschnitt des Strömungskanals am Eintritt des Konfusors 2 für den Gasstrom und der Breite und dem Strömungsquerschnitt des Strömungskanals am Austritt des Diffusors 4 für den Gasstrom kleiner. Damit ist die Geschwindigkeit des Gasstromes im Bereich der Kehle 3 am größten. Im Bereich des Eintritts der Kehle 3 für den Gasstrom sind Düsen 7 zum Eindüsen einer mit auf die Düsen 7 zeigenden Pfeilen dargestellten Waschflüssigkeit, üblicherweise Wasser, vorgesehen. Unmittelbar auf Höhe der Düsen 7 ist die Relativgeschwindigkeit zwischen der Waschflüssigkeit und dem anströmenden Gasstrom am Höchsten, so dass dort der größte Anteil von im Gasstrom enthaltenen Partikeln von der Waschflüssigkeit aufgenommen werden kann. Die Waschflüssigkeit wird durch den Gasstrom in Strömungsrichtung beschleunigt, so dass die Relativgeschwindigkeit abnimmt. Je mehr sich die Relativgeschwindigkeit zwischen Gasstrom und Waschflüssigkeit verringert, desto weniger Partikel werden von der Waschflüssigkeit im weiteren Strömungsverlauf aufgenommen. Die Zone hoher Relativgeschwindigkeit in der Kehle 3 ist grau unterlegt.

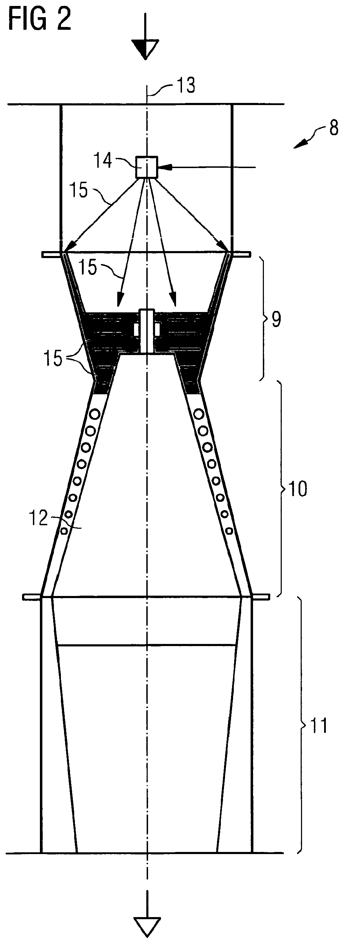

In Figur 2 ist der typische Aufbau eines Ringspaltwäschers 8 mit einem sich in Strömungsrichtung des mit den Pfeilen mit halb gefüllter Spitze angedeuten zu reinigenden Gasstromes kontinuierlich verengenden Gehäuseteil, dem Konfusor 9, einem sich unmittelbar daran anschließenden, kontinuierlich erweiternden Gehäuseteil, dem Diffusor 10, und einem sich daran anschließenden Gehäuseteil 11 mit konstantem Querschnitt dargestellt.

Ein Ringspaltkörper 12 sitzt in dem von Konfusor 9, Diffusor 10, und Gehäuseteil 11 gebildeten Teil des Gehäuses des Ringspaltwäschers 8; sein oberer Teil verjüngt sich entgegen der Strömungsrichtung, also in Richtung Konfusor 9, kegelartig; seine stumpfe obere Stirnseite ragt von unten in den unteren Teil des Konfusors 9 hinein. Der untere Teil des Ringspaltkörpers 12 setzt in Höhe des Übergangs des Diffusors 10 und des Gehäuseteiles 11 am oberen Teil des Ringspaltkörpers 12 an und verjüngt sich in Strömungsrichtung. Das Gehäuse und der Ringspaltkörper 12 sind im Wesentlichen rotationssymmetrisch ausgebildet. Der Ringspaltkörper 12 ist im Gehäuse axial beweglich angeordnet. Zwischen Ringspaltkörper 12 und Gehäuse ist ein Ringspalt ausgebildet, der Teil des Strömungskanales des Ringspaltwäschers 8 ist.

Grundsätzlich kann bei der vorliegenden Erfindung der Ringspaltkörper so positioniert sein, dass der Ringspalt schon im Konfusor besteht -, wie in Figur 2 dargestellt -, oder er kann so positioniert sein, dass der Ringspalt erst im Diffusor besteht und nicht schon im Konfusor - nicht extra dargestellt.

Konfusor 9, Diffusor 10, und Gehäuseteil 11 sowie Ringspaltkörper 12 definieren den Strömungskanal des Ringspaltwäschers. Die Längsachse des Ringspaltwäschers, die mit der Längsachse seines Strömungskanals zusammenfällt, ist mit dem Bezugszeichen 13 versehen. Die Ringspaltbreite kann durch ein axiales Verschieben des Ringspaltkörpers 12 nach unten vergrößert und umgekehrt durch ein Verschieben nach oben verringert werden kann. Damit kann der Strömungsquerschnitt an eine Veränderung des Mengenstromes des Gasstromes angepasst werden.

Oberhalb des Konfusors 9 ist eine zentrale Düse 14 zum Eindüsen von Waschflüssigkeit 15 angeordnet. Wie mit den Pfeilen angedeutet, strömt die Waschflüssigkeit 15 über die zentrale Düse 14 sowohl durch den Konfusor 9 direkt in den Ringspalt, als auch an die Wand des Konfusors 9, an der die Waschflüssigkeit 15 als Film abwärts fließt und an der Kante zwischen Konfusor 9 und Diffusor 10 aufgrund der dort auftretenden hohen Strömungsgeschwindigkeit des Gasstromes abreißt. Die Relativgeschwindigkeit zwischen Waschflüssigkeit 15 und Gasstrom ist in dem mit Querstrichen versehenen Bereich am höchsten. Danach schließt sich in Strömungsrichtung ein Abschnitt des Ringspaltes an, in dem die zweiphasige Gasstrom-Waschflüssigkeit-Strömung turbulent ist, dargestellt durch einen mit Kreisen versehenen Bereich. Die in der turbulenten Strömung auftretenden relativen Querbewegungen zwischen Gasstrom und Waschflüssigkeit 15 führen zu einer zusätzlichen Diffusion von Partikeln in die Waschflüssigkeit 15.

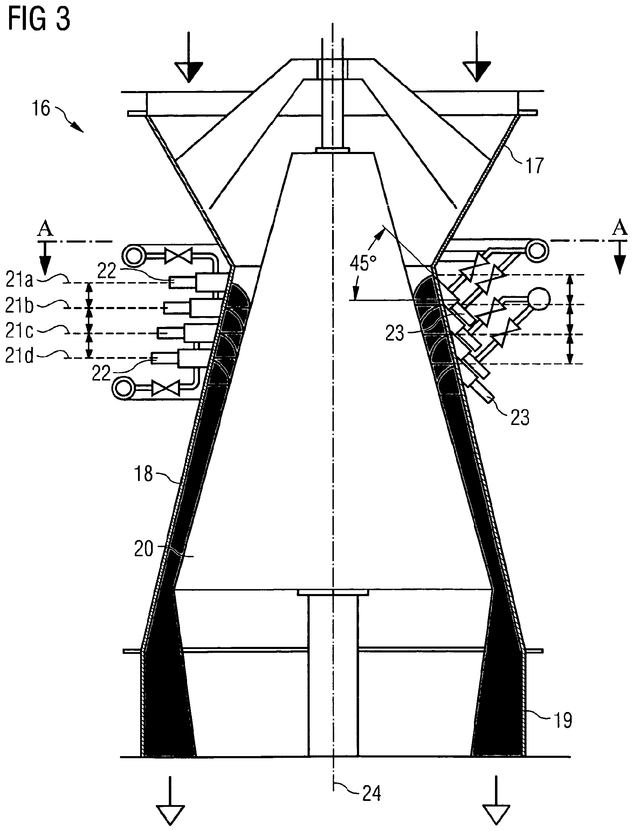

In Figur 3 sind Ausführungsformen eines erfindungsgemäßen Ringspaltwäschers 16 dargestellt, wobei die Figur 3 gleichzeitig zwei halbseitige Längsschnitte zwei verschiedener Ausführungsformen der Erfindung bezüglich Düsenanstellung zeigt.

Sie weisen jeweils ein Gehäuse mit einem sich in Strömungsrichtung des zu reinigenden Gasstromes kontinuierlich verengenden Gehäuseteil Konfusor 17, einem sich unmittelbar daran anschließenden, kontinuierlich erweiternden Gehäuseteil Diffusor 18, und einem sich daran anschließenden Gehäuseteil 19 mit konstantem Querschnitt auf. In diesen Teilen des Gehäuses des Ringspaltwäschers 16 sitzt der Ringspaltkörper 20, dessen oberer Teil sich entgegen der Strömungsrichtung kegelartig verjüngt und dessen stumpfe obere Stirnseite von unten in den unteren Teil des Konfusors 17 hineinragt. Der untere Teil des Ringspaltkörpers 20 setzt in Höhe der Übergänge des Diffusors 18 und des Gehäuseteiles 19 an und verjüngt sich in Strömungsrichtung. Gehäuse und Ringspaltkörper 20 sind im Wesentlichen rotationssymmetrisch ausgebildet. Der Ringspaltkörper 20 ist im Gehäuse axial beweglich angeordnet. Dadurch kann die jeweilige Breite des Ringspalts an den Mengenstrom der Gasströmung angepasst werden. Anders als bei herkömmlichen Ringspaltwäschern wie in Figur 2 dargestellt ist keine zentralen Düse für Waschflüssigkeit oberhalb des Konfusors 17 vorgesehen. Vielmehr sind im Eintrittsbereich des Ringspaltes in den Ringspalt mündende Düsen 22,23 vorhanden. Diese sind in vier in Strömungsrichtung hintereinander angeordneten Ebenen 21a, 21b, 21c, 21d angeordnet; die in den Ringspalt mündenden Düsen 22,23 zur Eindüsung von Waschflüssigkeit sind also in diesen vom Konfusor 17 in Richtung Diffusor 18 entlang der Längsachse des Ringspaltwäschers 16 gesehen hintereinander liegenden Ebenen 21a, 21b, 21c, 21d angeordnet. Die Ebenen liegen alle senkrecht zur Längsachse 24 des Ringspaltwäschers, sind also Querschnittsebenen des Strömungskanals im Ringspalt. Die Düsen 22 der in der linken Bildhälfte in Figur 3 dargestellten Ausführungsform sind senkrecht zur Längsachse 24 des Ringspaltwäschers 16 angeordnet, während die in der rechten Bildhälfte dargestellten Düsen 23 in einem spitzen Winkel von 45° zur Längsachse 24 des Ringspaltwäschers 16 angestellt sind. In beiden Fällen erfolgt die Eindüsung der Waschflüssigkeit mit einer Geschwindigkeitskomponente entgegen der Strömungsrichtung des Gasstromes im Ringspalt. Hierdurch wird eine größtmögliche Relativgeschwindigkeit zwischen Gasstrom und Waschflüssigkeit erreicht.

Dargestellt ist eine Auslegung des Ringspalts von erfindungsgemäßen Ringspaltwäschern, bei der nach dem Bereich des Ringspaltes, in dem Eindüsung der Waschflüssigkeit erfolgt - also die Düsen angeordnet sind - und in dem das Gas auf die eingedüste Waschflüssigkeit trifft und die Waschflüssigkeit vom Gasstrom in Strömungsrichtung beschleunigt wird, die Ringspaltstrecke ausreichend lang ist, um Partikeln, insbesondere solche mit einer Größe im Submikronenbereich - also Partikel, deren Ausdehnung in jede der Raumrichtungen kleiner 1 $\mu$m ist -, durch die turbulente Diffusion zu erfassen. Dabei ist die Ausdehnung des Ringspalts so konzipiert, dass die Länge der Strömungsstrecke für die turbulente Diffusion in etwa der Länge der Strecke entspricht, in der sich die Relativgeschwindigkeit in Strömungsrichtung von Waschflüssigkeit und Gas auf etwa 20% oder weniger einer anfänglichen Relativgeschwindigkeit zum Zeitpunkt des Auftreffens des Gasstromes auf die Waschflüssigkeit reduziert hat. Auch mit dieser Maßnahme wird der Abscheidungsgrad des Wäschers verbessert.

Der Abstand der Ebenen 21a, 21b, 21c, 21d voneinander in Richtung Längsachse 24 beträgt jeweils 200 mm.

Die Düsen einer Ebene sind unabhängig von den Düsen anderer Ebenen einschaltbar und abschaltbar.

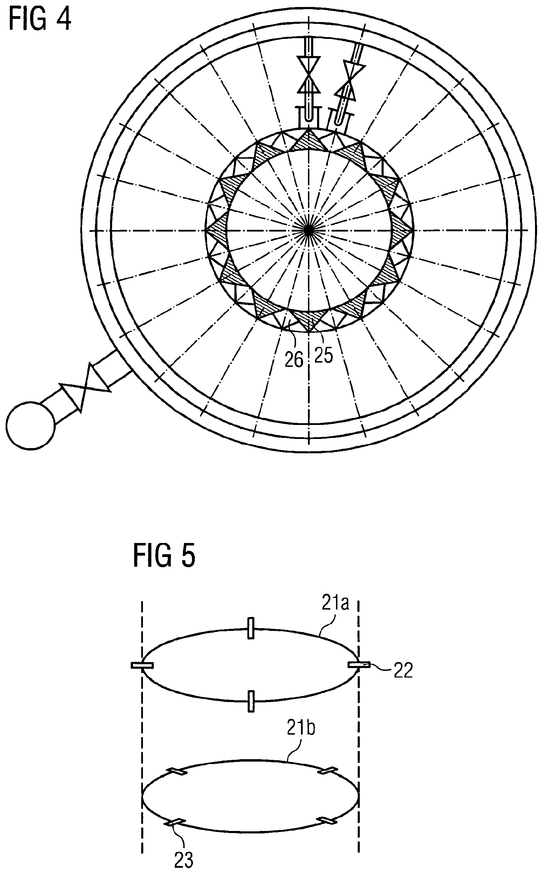

In Figur 4 ist an der dargestellten Eindüsung der Waschflüssigkeit der Figur 3 im Schnitt A-A zu erkennen, dass jeweils zwölf Düsen in einer Ebene in Umfangsrichtung gleichmäßig verteilt sind, wobei in Strömungsrichtung gesehen in hintereinander liegenden Ebenen angeordnete Düsen versetzt zueinander angeordnet sind.

Zur besseren Übersichtlichkeit ist nur jeweils eine Düse der Ebene 21 a und eine Düse der Ebene 21b dargestellt. Düsen der Ebene 21 a bilden Spritzkegel 38 die dunkler gefüllt sind als Spritzkegel 39 von Düsen der Ebene 21 b. Dadurch wird eine deutlich verbesserte Abdeckung des Ringspaltes mit Waschflüssigkeit erzielt.

Sowohl bei Ringspaltwäschern als auch bei klassischen Venturiwäschern erscheint ein Abstand der Düsenebenen von etwa 200 mm in Strömungsrichtung besonders geeignet.

In Figur 5 ist in einer Schrägansicht eine versetzte Anordnung von Düsen 22,23 in den beiden Ebenen 21a und 21b der Figur 3 schematisch gezeigt. Um nicht von Waschflüssigkeit erreichte Totbereiche im Gasstrom zu vermeiden, sind die Düsen 22,23 in Ebene 21b in Bereichen des Umfangs der Kehle angeordnet, die einen Zwischenraum zwischen den Düsen 22,23 in Ebene 21a darstellen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Liste der Bezugszeichen

| 1 | Venturiwäscher |
|---|---|
| 2 | Konfusor |
| 3 | Kehle |
| 4 | Diffusor |
| 5 | Längsachse des Strömungskanals |
| 6 | Breite der Kehle 3 |
| 7 | Düse |
| 8 | Ringspaltwäscher |
| 9 | Konfusor |
| 10 | Diffusor |
| 11 | Gehäuseteil mit konstantem Querschnitt |
| 12 | Ringspaltkörper |
| 13 | Längsachse des Ringspaltwäschers |
| 14 | zentrale Düse |
| 15 | Waschflüssigkeit |
| 16 | Ringspaltwäscher |
| 17 | Konfusor |
| 18 | Diffusor |
| 19 | Gehäuseteil |
| 20 | Ringspaltkörper |
| 21a,21b,21c,21d | Ebenen |
| 22 | Düsen |
| 23 | Düsen |
| 24 | Längsachse des Ringspaltwäschers |
| 25 | Spritzkegel |
| 26 | Spritzkegel |

**Patentansprüche**

1. Ringspaltwäscher mit einer Längsachse,

- mit einem zumindest durch einen Konfusor, einen Diffusor und einen Ringspaltkörper definierten Strömungskanal,

wobei der Ringspaltkörper mit zumindest dem Diffusor, und gegebenenfalls auch mit dem Konfusor, einen Ringspalt des Strömungskanals ausbildet,

und

- mit Düsen zum Eindüsen von Waschflüssigkeit in den Strömungskanal,

wobei zumindest mehrere, besonders bevorzugt alle diese Düsen in den Ringspalt münden, und dass die in den Ringspalt mündenden Düsen zur Eindüsung von Waschflüssigkeit in mindestens zwei, vorzugsweise in vier, Ebenen vom Konfusor in Richtung Diffusor entlang der Längsachse des Ringspaltwäschers gesehen hintereinander angeordnet sind; **gekennzeichnet dadurch, dass** die Düsen von in Richtung der Längsachse des Strömungskanals hintereinander liegenden Ebenen zueinander versetzt am Umfang des Ringspaltes angeordnet sind.

2. Ringspaltwäscher nach Anspruch 1, **dadurch gekennzeichnet, dass** zumindest eine der Düsen, bevorzugt mehrere der Düsen, besonders bevorzugt alle Düsen in Richtung zum Diffusor hin in einem spitzen Winkel gegen die Längsachse des Ringspaltwäschers im Ringspalt angestellt sind.

3. Ringspaltwäscher nach Anspruch 2, **dadurch gekennzeichnet, dass** die Düsen mit der Längsachse des Ringspaltwäschers einen Winkel von in einem Bereich mit einer Untergrenze von zumindest 20°, bevorzugt zumindest 30°, und einer Obergrenze von maximal 70°, bevorzugt maximal 60°, ein, vorzugsweise 20°-70° oder 30°-60°, ganz besonders bevorzugt 45°, einschließen.

4. Ringspaltwäscher nach einem der Ansprüche 1 bis 3, **dadurch gekennzeichnet, dass** die Düsen einer Ebene unabhängig von den Düsen anderer Ebenen einschaltbar und/oder abschaltbar sind.

5. Verwendung eines Ringspaltwäscher nach einem der Ansprüche 1 bis 4 zur Reinigung von Konvertergas.

**Claims**

1. Annular gap scrubber with a longitudinal axis,

   - having a flow channel defined at least by a confusor, a diffusor and an annular gap body,
   wherein the annular gap body with at least the diffusor, and optionally also with the confusor, forms an annular gap of the flow channel,
   and
   - having nozzles for injecting scrubbing liquid into the flow channel,

   wherein
   at least several, particularly preferably all of these nozzles open into the annular gap and the nozzles opening into the annular gap for injecting scrubbing liquid are arranged in at least two, preferably in four, successive planes viewed from the confusor toward the diffusor along the longitudinal axis of the annular gap scrubber,
   **characterised in that**
   the nozzles of planes lying in succession in the direction of the longitudinal axis of the flow channel are arranged offset with respect to one another on the perimeter of the annular gap.

2. Annular gap scrubber according to claim 1, **characterised in that** at least one of the nozzles, preferably several of the nozzles, particularly preferably all of the nozzles, are positioned in the direction of the diffusor at an acute angle to the longitudinal axis of the annular gap scrubber in the annular gap.

3. Annular gap scrubber according to claim 2, **characterised in that** the nozzles, with the longitudinal axis of the annular gap scrubber, enclose an angle, in a range having a lower limit of at least 20°, preferably at least 30°, and an upper limit of maximally 70°, preferably maximally 60°, of preferably 20°-70° or 30°-60°, very particularly preferably 45°.

4. Annular gap scrubber according to one of claims 1 to 3, **characterised in that** the nozzles of one plane can be activated and/or deactivated independently of the nozzles of other planes.

5. Use of an annular gap scrubber according to one of claims 1 to 4 for scrubbing converter gas.

**Revendications**

1. Laveur à fente annulaire présentant un axe longitudinal,

   - comprenant un canal d'écoulement défini au moins par un cône convergent, un diffuseur et un corps à fente annulaire,
   dans lequel le corps à fente annulaire forme une fente annulaire du canal d'écoulement avec au moins le diffuseur et, le cas échéant, également avec le cône convergent,
   et
   - comprenant des buses pour l'injection de liquide de lavage dans le canal d'écoulement,

   dans lequel aux moins plusieurs buses, plus préférablement toutes ces buses, débouchent dans la fente annulaire, et les buses destinées à l'injection de liquide de lavage qui débouchent dans la fente annulaire sont disposées les unes derrière les autres, dans la direction allant du cône convergent vers le diffuseur le long de l'axe longitudinal du laveur à fente annulaire, dans au moins deux, de préférence dans quatre, plans ;
   **caractérisé en ce que**
   les buses de plans situés les uns derrière les autres dans la direction de l'axe longitudinal du canal d'écoulement sont disposées de manière décalée les unes par rapport aux autres sur la circonférence de la fente annulaire.

2. Laveur à fente annulaire selon la revendication 1, **caractérisé en ce qu'**au moins une des buses, préférablement plusieurs des buses, plus préférablement toutes les buses, sont installées dans la fente annulaire suivant un angle aigu par rapport à l'axe longitudinal du laveur à fente annulaire en direction du diffuseur.

3. Laveur à fente annulaire selon la revendication 2, **caractérisé en ce que** les buses forment avec l'axe longitudinal du laveur à fente annulaire un angle compris dans une plage ayant une limite inférieure d'au moins 20°, préférablement d'au moins 30°, et une limite supérieure de 70° maximum, préférablement 60° maximum, de préférence de 20°-70° ou de 30°-60°, de manière encore préférée de 45°.

4. Laveur à fente annulaire selon l'une des revendications 1 à 3, **caractérisé en ce que** les buses d'un plan peuvent être mises en marche et/ou arrêtées indépendamment des buses d'autres plans.

5. Utilisation d'un laveur à fente annulaire selon l'une des revendications 1 à 4 pour le nettoyage de gaz de convertisseur.

FIG 1

FIG 2

FIG 3

16

17

A

A

21a
21b
21c
21d

22

22

45°

23

23

18

20

19

24

FIG 4

26  25

FIG 5

21a

22

21b

23

**EP 2 720 776 B1**

**IN DER BESCHREIBUNG AUFGEFÜHRTE DOKUMENTE**

**In der Beschreibung aufgeführte Patentdokumente**

- GB 1227499 A
- US 3556489 A
- GB 809378 A
- US 3284064 A
- LU 90847
- US 2913232 A
- US 3517485 A